# EUROPÄISCHE PATENTSCHRIFT

(11) **EP 4 065 252 B1**
(45) Veröffentlichungstag und Bekanntmachung des Hinweises auf die Patenterteilung: **16.04.2025**
(21) Anmeldenummer: 20808340.2
(22) Anmeldetag: 17.11.2020
(51) Int. Cl.: B01D 46/00, B01D 46/24, B01D 46/48

(54) **VERFAHREN ZUR INTERMITTIERENDEN ABREINIGUNG EINES FILTERS SOWIE FILTEREINRICHTUNG FÜR EINE METALL-DRUCKEINRICHTUNG**
METHOD FOR INTERMITTENTLY CLEANING A FILTER, AND FILTER DEVICE FOR A METAL PRINTING DEVICE
PROCÉDÉ DE NETTOYAGE INTERMITTENT D'UN FILTRE ET DISPOSITIF DE FILTRATION POUR UN DISPOSITIF D'IMPRESSION DE MÉTAL

(30) Priorität: 28.11.2019 DE 102019132349
(43) Veröffentlichungstag der Anmeldung: 05.10.2022
(73) Patentinhaber: Gebr. Becker GmbH, 42279 Wuppertal (DE)
(72) Erfinder: RADERMACHER, Bernhard, 41352 Korschenbroich (DE); RADAU, Christian, 58332 Schwelm (DE)
(74) Vertreter: Müller, Enno
(86) Internationale Anmeldenummer: PCT/EP2020/082329
(87) Internationale Veröffentlichungsnummer: WO 2021/104927

(56) Entgegenhaltungen:
- DE-A1- 102012 004 587
- DE-A1- 102015 118 746
- DE-A1- 102018 002 314
- US-B2- 8 794 263

## Beschreibung

### Gebiet der Technik

Die Erfindung betrifft zunächst ein Verfahren zur intermittierenden Abreinigung eines Filters in einer Filtereinrichtung nach den Merkmalen des Oberbegriffes des Anspruchs 1 und ein Verfahren zum Betrieb einer Metall-Druckeinrichtung nach den Merkmalen des Oberbegriffes des Anspruches 3.

Weiter betrifft die Erfindung eine Filtereinrichtung für eine Metall-Druckeinrichtung nach den Merkmalen des Oberbegriffes des Anspruches 4.

### Stand der Technik

Bei Metall-Druckeinrichtungen wie beispielsweise Lasersinter- oder Laserschmelzanlagen, weiter beispielsweise sogenannte 3D-Laserdruckanlagen, ist es bekannt, der Kabine der Druckeinrichtung im Umwälzverfahren Prozessgas zuzuführen, das im Hinblick auf während des Metall-Druckvorganges insbesondere durch die große Hitzeeinwirkung entstehende Verunreinigungen (beispielsweise Schmauch), die insbesondere durch die Laseranwendung entstehen können, gereinigt bzw. regeneriert wird.

Die Herstellung eines Druckstückes in der Metall-Druckeinrichtung erfolgt bevorzugt in einer durch ein Prozessgas erreichten Schutzgasatmosphäre. So wird als Prozessgas in der Regel ein inertes Gas wie beispielsweise Argon oder Stickstoff genutzt, wobei weiter bevorzugt Argon oder Stickstoff als alleiniges Gas genutzt wird. Prinzipiell kann aber auch eine Mischung von Gasen, insbesondere also inerten Gasen, als Prozess- oder Schutzgas vorliegen. In der Regel wird angestrebt, dass die Atmosphäre insbesondere in der Kabine keinen oder praktisch keinen Sauerstoff enthält. Das die Filtereinrichtung durchströmende Medium ist somit im Falle der Metall-Druckeinrichtung das Prozessgas.

Je nach Größe und/oder Komplexität des zu erzeugenden Druckstücks kann sich ein solcher Druckvorgang durchaus über mehrere Stunden bis hin zu mehreren Tagen erstrecken.

Eine Metall-Druckeinrichtung ist beispielsweise bekannt aus der DE 10 2017 206 792 A1. Im Zusammenhang mit einer Filtereinrichtung ist eine solche Metall-Druckeinrichtung beispielsweise bekannt geworden aus der DE 20 2012 013 036 U1. Aus der DE 10 2015 118 746 A1 ist ein Verfahren zur Abreinigung eines Filters bekannt.

Aus der DE 10 2018 002 314 A1 ist ein Verfahren zur intermittierenden Abreinigung eines Filters bekannt, bei welchem die Abreinigung durch eine Ölfüllung vorgenommen wird. Die Ölfüllung durchströmt zum Abreinigen sowohl eine Filtergut-Sammelkammer und das Filtergehäuse. Es kann auch eine von mehreren Filtereinrichtungen abgesperrt und aus einem Regenerationsbetrieb herausgenommen werden. Hierbei ergeben sich allerdings Nachteile im Hinblick auf den Betrieb der Metall-Druckeinrichtung. Die Filtergut-Sammelkammer ist ständig mit der Filtereinrichtung verbunden, im Hinblick auch auf eine gemeinsame Durchströmung im Falle einer Ölfüllung. Die Filtergut-Sammelkammer ist auch ständig fest mit der Filtereinrichtung verbunden.

Im Weiteren ist zum Stand der Technik auf die US 8,794,263 B2 und die DE 10 2012 004 587 A1 zu verweisen.

Ausgehend von einem Stand der Technik gemäß der DE 10 2018 002 314 A1 beschäftigt sich die Erfindung mit der Aufgabe, ein vorteilhaftes Verfahren zur intermittierenden Abreinigung eines Filters sowie eine vorteilhafte Filtereinrichtung anzugeben. Zudem ist es Aufgabe der Erfindung, ein vorteilhaftes Verfahren zum Betrieb einer Metall-Druckeinrichtung anzugeben.

Diese Aufgabe ist hinsichtlich des Verfahrens zur intermittierenden Abreinigung eines Filters beim Gegenstand des Anspruches 1 gelöst, wobei darauf abgestellt ist, dass die Filtereinrichtung eine Filtergut-Sammelkammer aufweist und dass die Filtergut-Sammelkammer vor dem Einsaugen des Spülmediums in das Filtergehäuse zur Aufrechterhaltung des Unterdrucks in der Filtergut-Sammelkammer abgeschlossen wird.

Hinsichtlich der Filtereinrichtung für eine Metall-Druckeinrichtung ist die Aufgabe beim Gegenstand des Anspruches 4 gelöst, wobei darauf abgestellt ist, dass die Filtereinrichtung zugeordnet dem Filtergehäuse eine Filtergut-Sammelkammer aufweist und dass die Filtergut-Sammelkammer von dem Filtergehäuse abnehmbar ist.

Zur Abreinigung des Filters wird die diesbezügliche Filtereinrichtung entsprechend bevorzugt strömungsmäßig von der über den Mediumeinlass und den Mediumauslass angeschlossenen Einrichtung, wie beispielsweise eine Metall-Druckeinrichtung, getrennt. In dem hiernach (zunächst) gegenüber der Umgebung und der oder den weiteren Einrichtungen abgeriegelten Filtergehäuse wird durch Evakuierung des Innenraumes ein Unterdruck erzeugt. Dieser Unterdruck kann nur mehrere hundert Millibar (so bspw. 100 bis 500 mbar absolut) betragen oder auch vergleichsweise hoch sein (bspw. bis hin zu 1 mbar absolut).

Zumindest unter Nutzung dieses hergestellten Unterdrucks in dem Filtergehäuse kann ein zur Abreinigung des Filters dienendes Spülmedium zufolge eines sich einstellenden Saugeffektes eingeleitet werden. Durch diesen Saugeffekt wird eine effektive Durchsetzung des Filters, insbesondere einer Filterwandung, erreicht. Zusätzlich kann das Spülmedium zur weiteren Verbesserung der Filterabreinigung unter Druck in den Innenraum des Filtergehäuses zur Beaufschlagung des Filters eingeblasen werden.

Es ergibt sich zufolge der vorgeschlagenen Lösung eine vorteilhafte Abreinigung des Filters, insbesondere einer Filterwandung des Filters.

Die Filtereinrichtung für die Metall-Druckeinrichtung kann so ausgebildet sein, dass ein Innenraum des Filtergehäuses zur Erzeugung eines Unterdrucks absperrbar ist. Die Absperrung kann beispielsweise durch übliche Schieber- oder Ventilanordnungen erreichbar sein. Das Filtergehäuse ist zur Abreinigung des darin aufgenommenen Filters zumindest soweit vorbereitbar, dass der Innenraum des Filtergehäuses evakuierbar ist.

Zur Erzielung einer verbesserten Abreinigung eines Filters in einer Filtereinrichtung das Filtergehäuse kann zusätzlich zu dem Mediumeinlass und dem Mediumauslass ein absperrbarer Spülmediumeinlass zum Einbringen eines Spülmediums in den Innenraum des Filtergehäuses im Abreinigungsbetrieb vorgesehen sein. Hierdurch ist ermöglicht, nicht oder in einer Alternative nicht nur das im üblichen Betrieb durch den Filter strömende Medium zufolge Strömungsumkehr auch zur Abreinigung des Filters zu nutzen, sondern vielmehr ein gesondertes, ggf. allein zur Abreinigung des Filters dienendes Medium (Spülmedium) einzubringen. Hierzu kann, wie auch bevorzugt, ein gesonderter Spülmediumeinlass vorgesehen sein.

Zur vorteilhaften Ausgestaltung eines Betriebs einer Metall-Druckeinrichtung wird bei zwei oder mehr Filtereinrichtungen mit jeweils einem Filter, die parallel betrieben werden, vorgesehen zur Abreinigung einer Filtereinrichtung diese abzureinigende Filtereinrichtung abzusperren und aus dem Regenerationsbetrieb herauszunehmen und mit einem Spülmedium zu betreiben. Hierdurch wird es ermöglicht, einen kontinuierlichen Betrieb der Metall-Druckeinrichtung aufrecht zu erhalten, auch über einen längeren Zeitraum, wobei gleichwohl keine Filtereinrichtung vorgesehen sein muss, welche über den gesamten Zeitraum des Betriebs der Metall-Druckeinrichtung zur Herstellung eines bestimmten Gegenstandes im Metall-Druckverfahren zur Abreinigung der Atmosphäre bzw. des Prozessgases ausgelegt ist. Während der Abreinigung der Filtereinrichtung können die andere oder die mehreren weiteren Filtereinrichtungen weiter von dem Prozessgas zur Filterung durchsetzt werden.

Zufolge dieses Verfahrens ist trotz einer Filterabreinigung ein kontinuierlicher Betrieb der Metall-Druckeinrichtung ermöglicht. Dies erweist sich insbesondere bei Metalldrucken, die mehrere Stunden oder Tage dauern, von Vorteil. Hierzu wird die abzureinigende Filtereinrichtung aus dem Betriebskreislauf zufolge Absperrung entnommen. Die eine weitere Filtereinrichtung oder die mehreren weiteren Filtereinrichtungen übernehmen während des Abreinigungsbetriebes der abgesperrten Filtereinrichtung die Filterung des durch die Kabine der Metall-Druckeinrichtung strömenden Mediums.

Zur Abreinigung des Filters ist in einer möglichen Ausgestaltung vorgesehen, dass das Spülmedium in einer zu dem Filterbetrieb entgegengesetzten Richtung eingeleitet wird. Das Spülmedium kann im Abreinigungsbetrieb eine Filterwandung beispielsweise von innen nach außen im Wesentlichen durchsetzen, während im Filterbetrieb das zu filternde Medium im Wesentlichen von außen nach innen durch die Filterwandung strömt. Das jedenfalls entgegen der Strömungsrichtung im Filterbetrieb den Filter durchsetzende Spülmedium löst so in vorteilhafter Weise das an oder in der Filterwandung abgesetzte Filtergut und transportiert dies ggf. zufolge der Strömung ab.

Alternativ oder auch kombinativ zu einer Anströmung des Spülmediums in einer Richtung entgegen der üblichen Strömungsrichtung im Filterbetrieb kann zur Abreinigung des Filters das Spülmedium auch auf eine im Filterbetrieb eine Außenseite der Filterwandung darstellende Seite der Filterwandung geleitet sein. Dabei kann weiter eine Strömungsrichtung des Spülmediums beispielsweise etwa im Wesentlichen quer gerichtet sein zur Durchströmrichtung des Mediums im Filterbetrieb. Hierdurch kann eine unterstützende Wirkung des Abreinigungseffektes, insbesondere eines Abtrageffektes, erzielt werden.

Das Filterelement weist zugeordnet dem Filtergehäuse eine Filtergut-Sammelkammer auf. Diese kann, wie auch bevorzugt, ausgelegt sein zur Aufnahme von insbesondere im Zuge des Abreinigungsvorganges aus dem Filter heraus gelöstem Filtergut. Die Filtergut-Sammelkammer kann in üblicher Betriebsausrichtung der Filtereinrichtung beispielsweise bodenseitig des Filtergehäuses angeordnet sein und ggf. auch im üblichen Filterbetrieb aus dem zu filternden Medium gelöste bzw. abgesonderte Filtergut-Partikel aufnehmen.

Die Anordnung des Filter-Sammelgehäuses an dem Filtergehäuse kann gemäß einer weiter möglichen Ausgestaltung so gewählt sein, dass dieses zusammen mit dem Filtergehäuse unter Unterdruck setzbar ist. Eine Evakuierung des Innenraumes des Filtergehäuses kann beispielsweise zufolge eines geöffneten Übergangs zwischen Filtergehäuse und Sammelgehäuse entsprechend zu einer Evakuierung des Innenraumes des Filter-Sammelgehäuses führen.

Die Filtergut-Sammelkammer kann gegenüber dem Filtergehäuse, insbesondere dem Innenraum des Filtergehäuses, absperrbar sein. Nach einer solchen Absperrung wird gemäß einer bevorzugten Ausgestaltung in der Filtergut-Sammelkammer der Luftdruck, der vor Durchführung der Absperrung in der Filtergut-Sammelkammer herrscht, gehalten, so weiter bevorzugt der vor Absperrung zufolge Evakuierung erreichte Unterdruck.

Zur Absperrung zwischen der Filtergut-Sammelkammer und dem Filter bzw. dem Filtergehäuse kann ein Ausschleusventil vorgesehen sein. In der Öffnungsstellung des Ausschleusventils kann Filtergut aus dem Innenraum des Filtergehäuses in die Filtergut-Sammelkammer gelangen. Das Filtergut kann dabei in einfachster Weise Schwerkraft-abhängig in die Filtergut-Sammelkammer abfallen.

Gemäß einer weiter bevorzugten Ausgestaltung kann nach einem Druckausgleich im Innenraum des Filtergehäuses durch das eingesaugte und gegebenenfalls eingeblasene Spülmedium dieser Zugang zu der Filtergut-Sammelkammer geöffnet werden, zur Aufnahme von Filtergut in die Filtergut-Sammelkammer. Dabei kann durch den zuvor durch die hermetische Abriegelung der Filtergut-Sammelkammer gegenüber dem, den abzureinigenden Filter aufweisenden Innenraum des Filtergehäuses beibehaltenen Unterdruck in der Filtergut-Sammelkammer ein Einsaugen von abgelöstem Filtergut in die Sammelkammer erreicht werden. Das Filtergut kann sich im Zuge des Abreinigungsprozesses zufolge Beaufschlagung der Filterwandung durch das Spülmedium beispielsweise bodenseitig des Filtergehäuses, weiter beispielsweise im Bereich des Ausschleusventils sammeln. Mit Öffnen des Ausschleusventils kann ein Aussaugen des Gehäuseinnenraumes und ein Absaugen in die Sammelkammer erreicht werden.

In vorteilhafter Weise kann die Filtergut-Sammelkammer von dem Filtergehäuse abnehmbar sein. Entsprechend kann diesbezüglich beispielsweise ein Schraub- oder Steckanschluss der Sammelkammer an dem Filtergehäuse gegeben sein, weiter bevorzugt ein Anschluss, der werkzeuglos betätigbar ist. Die Filtergut-Sammelkammer kann so zur Entsorgung des Filtergutes transportiert werden.

Zum Verschluss der Filtergut-Sammelkammer kann darüber hinaus ein Absperrventil vorgesehen sein. Diesbezüglich kann es sich um ein gegenüber dem vorbeschriebenen Ausschleusventil gesondertes Ventil handeln, sodass nach Abnahme der Sammelkammer vom Filtergehäuse in bevorzugter Ausgestaltung sowohl die Sammelkammer durch das Absperrventil als auch das Filtergehäuse durch beispielsweise das entsprechend bevorzugt an dem Filtergehäuse angebrachte Ausschleusventil verschlossen sind. Das Sammelkammerseitige Absperrventil kann gemäß einer möglichen Ausgestaltung zur Entleerung der Sammelkammer öffenbar sein.

Das Absperrventil kann in der Anordnungsstellung der Filtergut-Sammelkammer an dem Filtergehäuse in einer Ventiloffenstellung gehalten sein. Es kann sich entsprechend bei dem Absperrventil beispielsweise um ein mechanisch wirkendes Ventil handeln, das in der Anordnungsstellung an dem Filtergehäuse entsprechend in eine Öffnungsstellung belastet ist. In einer beispielhaften Ausgestaltung kann ein das Absperrventil, ggf. als Absperrklappe ausgebildet, gegen die Kraft einer auf das Absperrventil wirkenden Feder von dem Filtergehäuse ausgehender Dorn vorgesehen sein. Somit kann sichergestellt sein, dass in der üblichen Betriebsstellung das Absperrventil in der Offenstellung gehalten ist und eine Absperrung eines Innenraumes der Filtergut-Sammelkammer bevorzugt allein durch das gegebenenfalls weiter vorgesehene Ausschleusventil erreichbar ist.

Zudem kann das Absperrventil mit Abnehmen der Filtergut-Sammelkammer von dem Filtergehäuse bevorzugt federunterstützt in eine Verschlussstellung verlagerbar sein. Mit Abnehmen der Filtergut-Sammelkammer von dem Filtergehäuse fehlt die bevorzugte Abstützung des Absperrventils zur Offenhaltung desselben. Eine auf das Ventil bzw. auf den Ventilkörper wirkende Feder kann den Ventilkörper bei fehlender Abstützung in die Verschlussstellung verlagern. Somit ist sichergestellt, dass mit Abnahme der Filtergut-Sammelkammer diese ohne weiteren Eingriff durch den Benutzer verschlossen ist.

Als Spülmedium kann ein von dem zu filternden Medium unterschiedliches Medium eingesetzt werden. Alternativ entspricht das Spülmedium dem zu filternden Medium, sodass als Spülmedium beispielsweise Argon oder Stickstoff zur Anwendung kommen kann, mit dem Vorteil, dass das Spülmedium nach dem Spülvorgang und nach einem Wiedereinbringen der Filtereinrichtung in den Filterkreislauf im System verbleiben kann.

Zum Aufbau des Unterdrucks in der Filtergut-Sammelkammer sowie in dem den Filter aufweisenden Innenraum des Filtergehäuses kann beispielsweise eine bevorzugt elektrisch betriebene Vakuumpumpe vorgesehen sein.

In einer möglichen Ausbildung können zwei Spülmediumeinlässe vorgesehen sein, von denen einer eine Durchsetzung der Filterwandung mit Spülmedium in eine entgegengesetzte Richtung zum Filterbetrieb bewirkt und einer eine Leitung des Spülmediums auf die Außenseite der Filterwandung. Die Ansteuerung der Spülmediumeinlässe kann dabei so gewählt sein, dass beide Spülmediumeinlässe zeitgleich und gegebenenfalls über denselben Zeitraum Spülmedium einleiten. Auch können die Spülmediumeinlässe wechselweise, weiter gegebenenfalls auch nacheinander Spülmedium auf den abzureinigenden Filter absprühen.

So kann weiter jedem Spülmediumeinlass jeweils ein Steuerventil zugeordnet sein. Diese Steuerventile können über eine vorgesehene Steuerungselektronik hinsichtlich ihrer Öffnungs- und Verschlussstellung bzw. -zeiten ansteuerbar sein. In diesem Zusammenhang bieten sich insbesondere pneumatisch betätigbare Steuerventile an. Denkbar sind alternativ aber auch beispielsweise elektrisch oder hydraulisch betätigbare Ventile.

Dem Mediumeinlass und dem Mediumauslass ist jeweils ein Absperrventil zugeordnet, um hierüber eine Leitungstrennung zwischen der Filtereinrichtung und einer leitungsmäßig verbundenen Einrichtung, wie insbesondere der genannten Metall-Druckeinrichtung, im Hinblick auf die Einrichtung und die Filtereinrichtung durchströmendes Medium, also beispielsweise Prozessgas, zu erreichen. Beispielsweise kann nach einem Verschluss der Absperrventile im Mediumeinlass und Mediumauslass die Filtereinrichtung aus dem Mediumkreislauf genommen werden.

Bezüglich der vorbeschriebenen Absperrventile kann es sich um pneumatisch steuerbare Ventile handeln. Alternativ können diesbezüglich auch elektrisch oder hydraulisch steuerbare Ventile vorgesehen sein.

Im Falle von pneumatischen Steuerventilen und/oder Absperrventilen können diese unter Nutzung beispielsweise des Spülmediums betätigbar sein.

Um bei einem Herausnehmen einer Filtereinrichtung aus dem Regenerationsbetrieb den Volumenstrom des Mediums, insbesondere den Volumenstrom des Prozessgases durch die Metall-Druckeinrichtung, ggf. eine Kabine der Metall-Druckeinrichtung, konstant oder zumindest annähernd konstant zu halten, wird das den Volumenstrom erzeugende Gebläse über eine bevorzugt integrierte Volumenstrommessung kontinuierlich geregelt. Die Herausnahme einer Filtereinrichtung zur Reinigung des Filters in der Filtereinrichtung geht zunächst, ohne eine Anpassung des Volumenstroms, etwa durch eine Regelung, einher mit einer Erhöhung des Volumenstroms in der verbleibenden Filtereinrichtung. Bevorzugt wird daher eine diesbezügliche Regelung des Volumenstroms, Zusätzlich zu einer Regelung des Volumenstroms beispielsweise durch eine Regelung des den Volumenstrom erzeugenden Gebläses wird bevorzugt die Herausnahme der abzureinigenden Filtereinrichtung zeitlich so abgestimmt vorgenommen, dass ein vorgegebener Grenzwert bezüglich einer Volumenstromzunahme oder -abnahme nicht überschritten wird. Ein solcher Grenzwert kann beispielsweise bei einem Zehntel bis einem Viertel des regulären Volumenstroms liegen. Ein Volumenstrom korreliert hier auch zu einem Massenstrom, so dass auf die Messung eines Massenstroms als Basis etwa für die Volumenstromregelung abgestellt werden kann.

Hierzu kann in dem Mediumauslass ein bevorzugt steuerbares Drosselventil angeordnet sein, welches vor dem Herausnehmen der Filtereinrichtung den Durchfluss so langsam reduziert, dass die Volumenstromregelung das Gebläse sicher nachregeln kann.

Es kann ein Filtermodul vorgesehen sein, wobei in dem Filtermodul beispielsweise zwei oder mehr Filtereinrichtungen mit jeweils einem Filter vorgesehen sein können, so weiter beispielsweise drei, vier oder fünf Filtereinrichtungen. Das Filtermodul, in dem auch bevorzugt weitere Aggregate wie ein Spülmediumspeicher und/oder ein Gebläse angeordnet sein können, kann vorteilhaft mit der weiteren Einrichtung, wie insbesondere der Metall-Druckeinrichtung an einer vereinfachten Schnittstelle verbunden werden.

Bei einer Anordnung mehrerer Filtereinrichtungen in einem Filtermodul sind diese bevorzugt hinsichtlich ihrer Einlass- und Auslassverrohrung parallel geschaltet, was nach einer Absperrung im Bereich eines Mediumeinlasses und eines Mediumauslass auch die Herausnahme der abgesperrten Filtereinrichtung aus dem Regenerationsbetrieb ermöglicht. In dieser abgesperrten Stellung der Filtereinrichtung ist der Filter mit dem Spülmedium abreinigbar.

Der Filtereinrichtung oder dem mehrere Filtereinrichtungen aufweisenden Filtermodul kann ein gesonderter Spülmediumspeicher zugeordnet sein. Aus diesem heraus wird Spülmedium über den oder die Spülmediumeinlässe im Abreinigungsbetrieb in den Innenraum des Filtergehäuses, insbesondere auf den Filter verbracht.

In weiterer Ausgestaltung kann der Filtereinrichtung oder den mehreren Filtereinrichtungen in einer Strömungsrichtung (bezogen auf den Filterbetrieb) des zu reinigenden Mediums betrachtet ein Vorabscheider vorgeschaltet sein. Über diesen Vorabscheider können beispielsweise Grobschmutzpartikel abgesondert werden, bevor diese in den Filter der Filtereinrichtung gelangen können. Ein solcher Vorfilter kann prinzipiell ähnlich ausgebildet sein wie die beschriebene Filtereinrichtung. Der beschriebene Abreinigungsvorgang kann auch zur Abreinigung eines Filters in dem Vorabscheider zur Anwendung kommen.

Auch kann der Filtereinrichtung oder den mehreren Filtereinrichtungen in der Strömungsrichtung des zu reinigenden Mediums betrachtet ein Feinstfilter nachgeschaltet sein. Ein solcher Feinstfilter ist geeignet, kleinste Partikel, die gegebenenfalls den Filter der Filtereinheit ohne abgeschieden zu werden durchsetzen können, auszufiltern, bevor das den Feinstfilter verlassende Medium zu der Einrichtung, beispielsweise der Metall-Druckeinrichtung, zurückströmt.

Das die Strömung des zu filternden Mediums erzeugende Gebläse kann ein übliches Umwälzgebläse sein. Üblicherweise kann es sich um sogenannte Radial- oder Seitenkanalverdichter handeln, mit Volumenströmen von bevorzugt 100 m³/h bis 500 m³/h (je nach Anlagengröße).

In der Strömungsrichtung nachgeschaltet zu dem Gebläse kann weiter ein Mediumkühler vorgesehen sein, zur Abkühlung des umströmenden Mediums vor Eintritt in die Einrichtung, insbesondere vor einem Eintritt als Prozessgas in die Kabine der Metall-Druckeinrichtung.

Nachstehend ist die Erfindung anhand der beigefügten Zeichnung erläutert, die aber lediglich ein Ausführungsbeispiel darstellt. Die Zeichnung zeigt:
- Fig. 1: in schematischer perspektivischer Darstellung eine Metall-Druckeinrichtung mit einem zugeordneten Filtermodul, aufweisend mehrere Filtereinrichtungen;
- Fig. 2: in perspektivischer Darstellung die Anordnung von drei strömungsmäßig parallelgeschalteten Filtereinrichtungen mit einem Umwälzgebläse und einem Mediumkühler;
- Fig. 3: eine schematische Schnittdarstellung durch eine Filtereinrichtung gemäß der Linie III-III in Figur 2, betreffend einen Verfahrensschritt zur Filterung eines durch die Filtereinrichtung strömenden Mediums;
- Fig. 4: eine Schnittdarstellung gemäß Figur 3, jedoch betreffend eine versetzte Schnittebene;
- Fig. 5: eine perspektivische Schnittdarstellung entlang der Linie V-V in Figur 4;
- Fig. 6: eine weitere schematische perspektivische Darstellung des Filtermoduls bei einer möglichen Herausnahme einer Filtereinrichtung;
- Fig. 7: eine der Figur 3 entsprechende Schnittdarstellung durch die Filtereinrichtung, betreffend einen Verfahrensschritt zur Evakuierung des Innenraumes eines Filtergehäuses;
- Fig. 8: eine Folgedarstellung zu Figur 7, betreffend einen Verfahrensschritt zur Abreinigung eines Filters in dem Filtergehäuse der Filtereinrichtung;
- Fig. 9: die Herausvergrößerung des Bereiches IX in Figur 8;
- Fig. 10: eine Folgedarstellung zu Figur 8 nach Beendigung des Abreinigungsvorganges und Überführen von Filtergut in eine Filtergut-Sammelkammer;
- Fig. 11: die Herausvergrößerung des Bereiches XI in Figur 8;
- Fig. 12: eine der Figur 10 im Wesentlichen entsprechende Darstellung, jedoch bei Abnahme der Filtergut-Sammelkammer vom Filtergehäuse;
- Fig. 13: eine der Figur 9 entsprechende Schnittdarstellung, jedoch nach Wiedereinbinden der abgereinigten Filtereinrichtung in den Filterungsprozess;

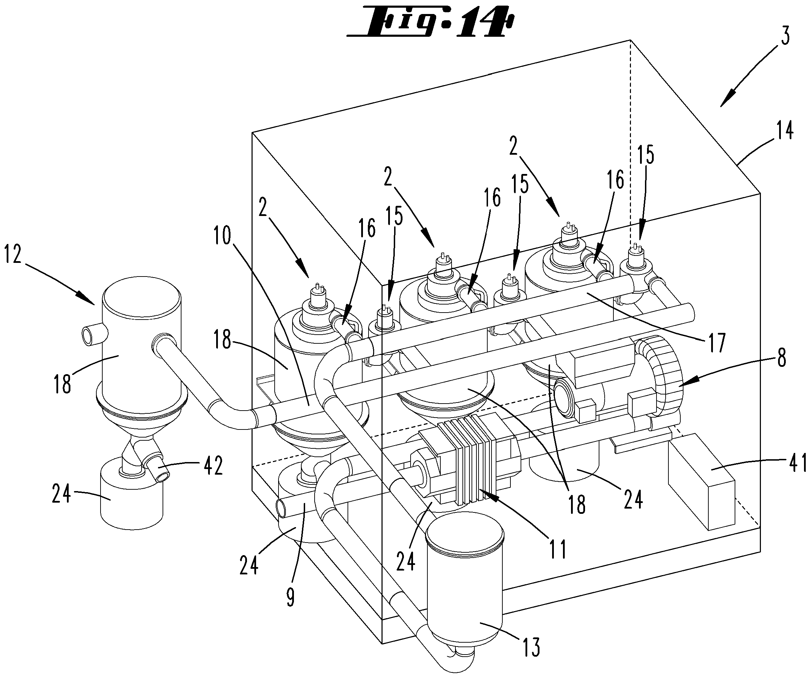

- Fig. 14: in schematischer perspektivischer Darstellung das um einen optionalen Vorabscheider und einen optionalen Feinstfilter ergänzte Filtermodul.

### Beschreibung der Ausführungsformen

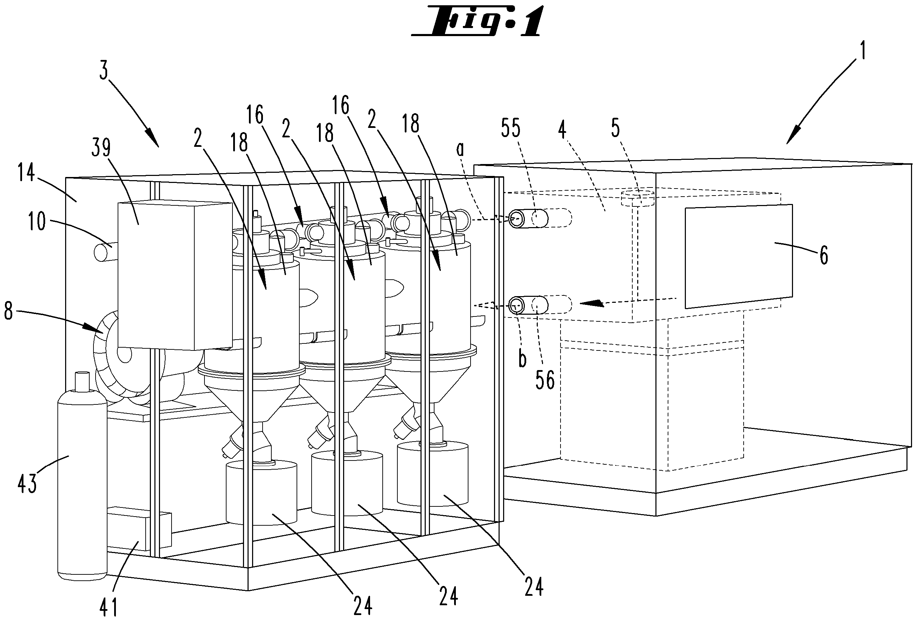

Dargestellt und beschrieben ist, zunächst mit Bezug zu Figur 1, eine Metall-Druckeinrichtung 1 mit einem zugeordneten, eine Vielzahl von Filtereinrichtungen 2 aufweisenden Filtermodul 3.

Die Metall-Druckeinrichtung 1 weist zunächst und im Wesentlichen eine Kabine 4 auf, in welcher der Metall-Druckvorgang durchgeführt werden kann. Hierbei wird zufolge selektiven Laserschmelzens aus feinem Metallpulver unter Einwirkung eines Laserstrahls schichtweise ein gewünschtes Bauteil hergestellt. Die Herstellung kann hierbei direkt aus sogenannten 3D-CAD-Daten erfolgen, sodass voll funktionsfähige Bauteile aus hochwertigen Metallen hergestellt werden können.

Neben der in Figur 1 nur schematisch dargestellten Laservorrichtung 5 ist weiter im Wesentlichen eine Auftragsvorrichtung zum Auftragen einer Metallpulverschicht Teil der Druckeinrichtung, darüber hinaus ein Partikel-Vorratsbehältnis, wie weiter auch ein Partikel-Sammelbehältnis, in welches hinein überschüssige Partikel abgestreift werden können.

Die Herstellung des Metallteils kann, wie auch bevorzugt, in einer rundum geschlossenen Kabine 4 erfolgen, wozu diese gegebenenfalls mit einer die Kabine 3 verschließenden Tür 6 oder dergleichen versehen sein kann.

Bezüglich des Herstellungsvorganges wird beispielsweise auf die eingangs zitierte die DE 10 2017 206 792 A1 verwiesen.

Während des Druckvorganges erfolgt bevorzugt eine Regenerierung der Atmosphäre in der Kabine 3. Hierzu wird bevorzugt im Umwälzverfahren ein gasförmiges Prozessgas 7, das bevorzugt ein Schutzgas wie etwa Argon oder Stickstoff ist, in die Kabine 4 eingeblasen und zugleich abgesogen. Hierzu dient bevorzugt ein Gebläse 8, beispielsweise in Art eines Umwälzgebläses. Bei dem Gebläse 8 kann es sich um einen sogenannten Seitenkanalverdichter oder dergleichen handeln.

In dem dargestellten Ausführungsbeispiel ist das Gebläse 8 in dem Filtermodul 3 unter räumlicher Zuordnung zu den Filtereinrichtungen 2 angeordnet.

Wie weiter auch insbesondere aus der schematischen Darstellung in Figur 1 zu erkennen, ist das Gebläse 8 über eine Druckleitung 9 und eine Saugleitung 10 sowie einen Einlass 55 und einen Auslass 56 mit dem Kabineninneren strömungsmäßig verbunden.

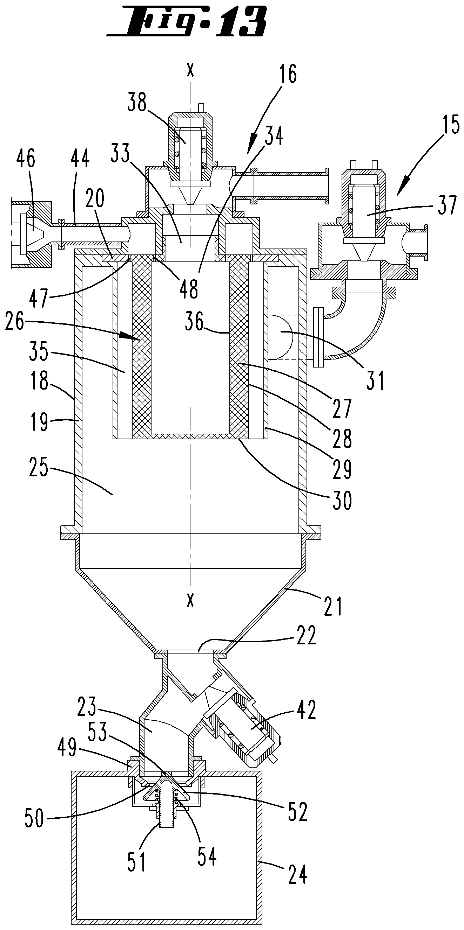

Hierbei kann die Druckleitung 9, ausgehend von dem Gebläse 8, unmittelbar, gegebenenfalls, wie in Figur 13 dargestellt, unter Zwischenschaltung eines Mediumkühlers 11, in die Kabine 3, bevorzugt zugeordnet einem Deckenbereich der Kabine 3, münden. Im Betrieb ergibt sich in der Druckleitung 9 eine Richtung a der Druckströmung des Mediums 7.

In die Saugleitung 10, entsprechend einer in Strömungsrichtung des Prozessgases 7 vor dem Gebläse 8, ist zumindest eine Filtereinrichtung 2 eingeschleift. Gemäß dem dargestellten Ausführungsbeispiel können mehrere Filtereinrichtungen 2, hier deren drei, vorgesehen sein.

Die Filtereinrichtungen 2 können zusammen mit dem Gebläse 8 und dem gegebenenfalls vorgesehenen Mediumkühler 11, darüber hinaus weiter gegebenenfalls mit einem optional vorsehbaren Vorabscheider 12 und/oder einem Feinstfilter 13 zusammengefasst in dem Filtermodul 3 angeordnet sein. Dieses Filtermodul 3 kann ein Filtergehäuse 14 aufweisen, welches die vorbeschriebenen Elemente umfasst. Es können sich lediglich zwei Schnittstellen jeweils zugeordnet der Druckleitung 9 und der Saugleitung 10 ergeben.

Ein gegebenenfalls vorgesehener Vorabscheider 12 ist in Strömungsrichtung des Prozessgases 7 betrachtet vor der einen Filtereinrichtung 2 bzw. vor den mehreren Filtereinrichtungen 2 vorgesehen, während der Feinstfilter 13 bezüglich der Filtereinrichtung 2 in Strömungsrichtung nachgeschaltet ist.

In der Saugleitung 10 ergibt sich bei einem üblichen Fertigungsprozess und einer damit einhergehenden Prozessgasumwälzung eine Richtung b der Saugströmung.

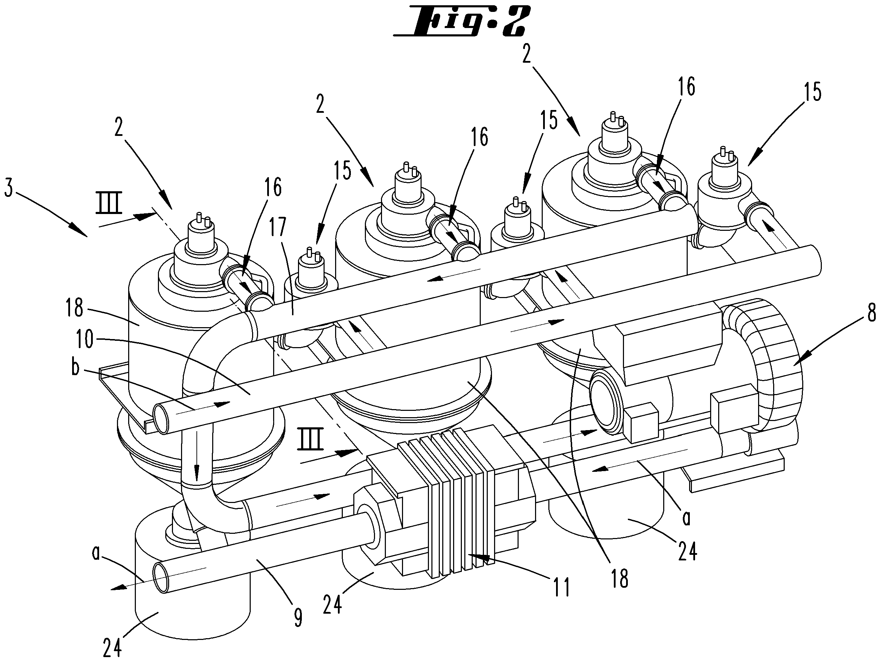

Die Filtereinrichtungen 2 sind bevorzugt in im Wesentlichen identischer Ausführung vorgesehen, hierbei jeweils einen Mediumeinlass 15 und einen Mediumauslass 16 aufweisend. Über den jeweiligen Mediumeinlass 15 ist jede Filtereinrichtung 2 bevorzugt unmittelbar mit der Saugleitung 10 verbunden. Die Mediumauslässe 16 der Filtereinrichtungen 2 münden in eine Saugübergangsleitung 17, die, gegebenenfalls unter Zwischenschaltung des Feinstfilters 13, zu dem Gebläse 8 führt (siehe insbesondere Figur 2).

Der Feinstfilter 13 kann bspw. auch in Strömungsrichtung endseitig der Druckleitung 9, ggf. auch noch in Strömungsrichtung nach dem Mediumkühler 11 vorgesehen sein.

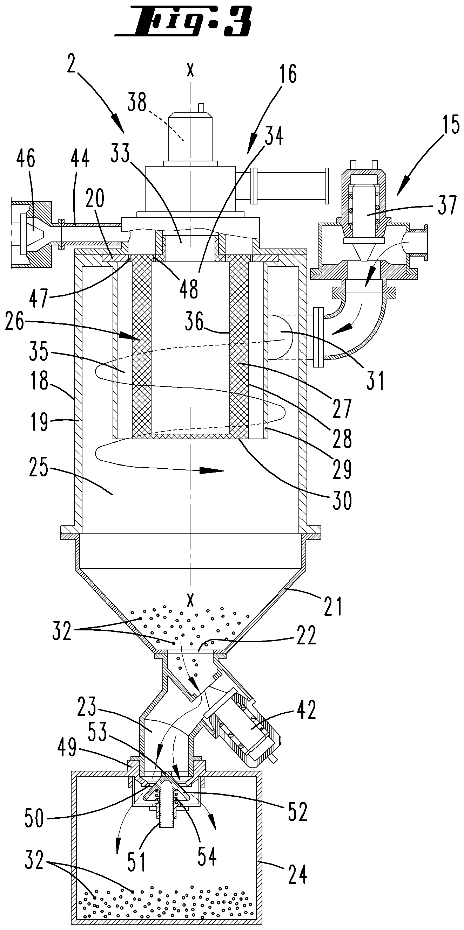

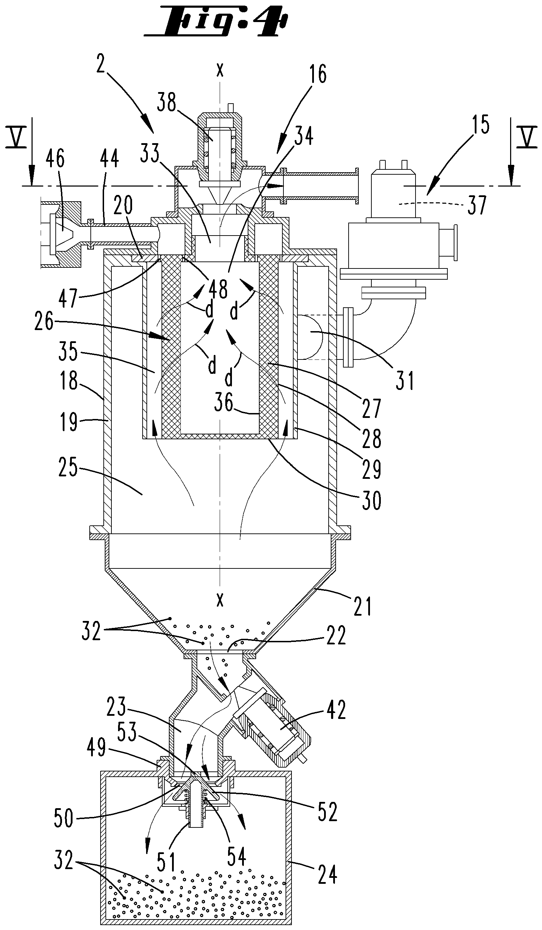

Die Figuren 3 und 4 zeigen jeweils eine - mit Bezug auf die übliche Betriebsstellung der Filtereinrichtung 2 - Vertikalschnittdarstellung durch eine der Filtereinrichtungen 2 im Regenerationsbetrieb, in welchem eine Filterung des verunreinigten, beispielsweise Schmauch aus der Kabine 4 austragenden Mediums 7 durchgeführt wird.

Wie beispielsweise aus der Schnittdarstellung in Figur 3 ersichtlich, kann die Filtereinrichtung 2 ein etwa kreiszylinderförmiges Filtergehäuse 18 aufweisen, mit einer umlaufenden Gehäusewandung 19 und einer Gehäusedecke 20. Der Gehäuseboden 21 kann trichterförmig gestaltet sein mit einer zentralen Bodenöffnung 22, an die sich eine Übergangsleitung 23 zu einem von dem Filtergehäuse 18 abnehmbaren Filtergut-Sammelkammer 24 anschließen kann.

Unterseitig der Gehäusedecke 20 kann gemäß den Darstellungen ein in den Innenraum 25 des Filtergehäuses 18 einragender Filter 26 angeordnet sein. Dessen Filterwandung kann, wie auch dargestellt, rohrartig, kreiszylindrisch ausgebildet sein, mit einer zentralen Längsachse x, die in üblicher Anordnungsstellung entlang einer Vertikalen ausgerichtet ist. Die Längsachse x des Filters 26 kann entsprechend dem dargestellten Ausführungsbeispiel zugleich die zentrale Längsachse des Filtergehäuses 18 insgesamt bilden.

Der Filter 26 ist mit Abstand zu der Außenfläche 28 der Filterwandung 27 umgeben von einer bevorzugt konzentrisch zur Längsachse x ausgerichteten Leitwandung 29. Diese Leitwandung 29 ist, wie auch der Filter 26, unterseitig der Gehäusedecke 20 quasi abgehängt und bevorzugt strömungsdicht mit dieser verbunden. Der sich zwischen der Leitwandung 29 und der Filterwandung 27 ergebende Ringraum 35 ist in Achsrichtung betrachtet hin zu dem Innenraum 25 offen ausgebildet, während die diesbezügliche, im üblichen Betrieb nach unten weisende Stirnfläche 30 des Filters 26 von der Strömung, insbesondere von dem Prozessgas 7 nicht durchdringbar ausgebildet sein kann. Hierbei abgeschiedenes Filtergut 32 kann allein schwerkraftabhängig durch die Bodenöffnung 22 des Gehäusebodens 21 in die Filtergut-Sammelkammer 24 abfallen.

Die Einlassöffnung 31 des Mediumeinlasses 15 kann, wie auch bevorzugt, in der Gehäusewandung 19 vorgesehen sein, so dass sich eine zumindest annähernd tangentiale Einströmung des Mediums 7 in den Innenraum 25 des Filtergehäuses 18 ergeben kann, wodurch zunächst eine wirbelartige Vorabscheidung von Filtergut 32 erreicht wird (vergleiche Figur 3). Die Filtereinrichtung 2 wirkt hierbei zunächst in Art eines Zyklonabscheiders, in dem die Prozessgasströmung von der Einlassöffnung 31 ausgehend wirbelartig in dem sich zwischen der Leitwandung 29 und der Gehäusewandung 19 ergebenden Ringraum geführt ist.

Die Auslassöffnung 33 des Mediumauslasses 16 kann gemäß dem dargestellten Ausführungsbeispiel im Bereich der Gehäusedecke 20 vorgesehen sein, insbesondere, wie weiter auch bevorzugt, zentral, die Längsachse x aufnehmend und weiter zugeordnet dem durch die Filterwandung 27 umschlossenen Filterinnenraum 34.

Zufolge der sich im üblichen Betrieb (Filterbetrieb) der Filtereinrichtung 2 ergebenden Saugströmung wird das in den Innenraum 25 eingesaugte Prozessgas 7 nach der wirbelartigen Umlenkung zugeordnet der nach unten weisenden Stirnfläche 30 des Filters 26 von unten in den Ringraum 35 zwischen der Filterwandung 27 und der Leitwandung 29 gesaugt, wonach sich eine Durchdringung der Filterwandung 27 von der Außenfläche 28 zu der Innenfläche 36 der Filterwandung 27 ergibt (siehe Pfeile d in Figur 4), sodass das gefilterte Medium 7 den Filterinnenraum 34 erreicht und über die Auslassöffnung 33 die Filtereinrichtung 2 verlässt (vergleiche Figur 4).

Hierbei abgeschiedenes Filtergut 32 kann in der Filterwandung 27 verhaftet sein. Gegebenenfalls im Zuge dieser Filterung durch den Ringraum 35 abfallendes Filtergut 32 wird bevorzugt in der Filtergut-Sammelkammer 24 gesammelt.

Wie aus den Schnittdarstellungen beispielsweise in den Figuren 3 und 4 ersichtlich können der Mediumeinlass 15 und der Mediumauslass 16 jeweils mit einem Sperrventil 37 bzw. 38 versehen sein, um so die Filtereinrichtung 2 zufolge Abriegelung gegenüber der Saugleitung 10 und der Saugübergangsleitung 17 aus dem Regenerationsbetrieb zu nehmen. Die Regeneration des Prozessgases 7 bei weiter im Betrieb befindlicher Metall-Druckeinrichtung 1 wird in einem solchen Zustand allein übernommen durch die weiteren Filtereinrichtungen 2 des Filtermoduls 3. So kann ein zumindest annähernd kontinuierlicher Betrieb der Metall-Druckeinrichtung 1 auch bei einem Ausfall oder einer bewussten Absperrung einer Filtereinrichtung 2, beispielsweise zur Reinigung derselben, sichergestellt werden.

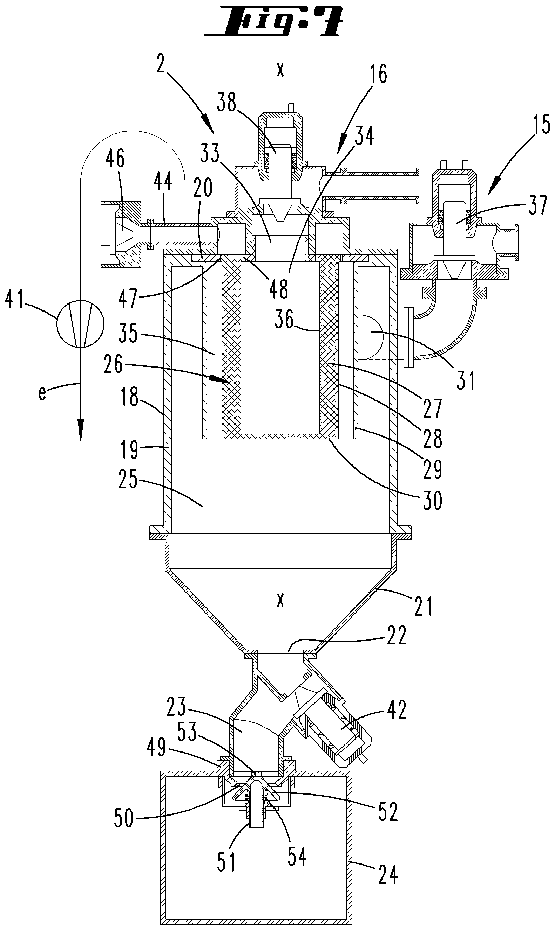

Hierzu werden die bevorzugt pneumatisch betätigbaren Absperrventile 37 und 38 des Mediumeinlasses 15 und des Mediumauslasses 16 in eine Sperrstellung gemäß Figur 7 verbracht. Die diesbezügliche Ansteuerung der Absperrventile 37 und 38 kann, wird auch bevorzugt, über eine nicht näher dargestellte Steuerelektronik 39 erfolgen, die auch Teil des Filtermoduls 3 sein kann.

Durch die Abriegelung unter Nutzung der Absperrventile 37 und 38 ist der Innenraum 25 der Filtereinrichtung 2, bevorzugt zusammen mit der Filtergut-Sammelkammer 24, hermetisch abriegelbar zu den weiteren Komponenten des Filtermoduls 3, insbesondere zu der vorgesehenen Verrohrung, den weiteren Filtereinrichtungen 2 und dem Gebläse 8.

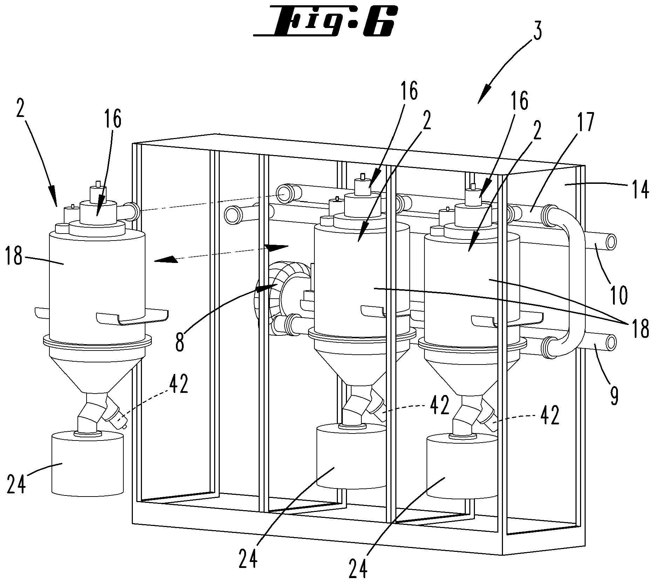

In dieser Absperrsituation kann die Filtereinrichtung 2, wie in Figur 6 schematisch dargestellt, auch unter Aufrechterhaltung des Filterbetriebes durch die weiteren Filtereinrichtungen 2 beispielsweise für Wartungs- oder Reparaturarbeiten aus dem Filtermodul 3 herausgenommen werden. Es ergibt sich eine schaltungstechnische Herausnahme derart, dass die herausgenommene Filtereinrichtung nicht mehr von dem Prozessgas durchströmt wird. Sie verbleibt aber natürlich unbewegt in der vorgegebenen Anordnung.

Um bei einer Herausnahme einer Filtereinrichtung 2 aus der Gesamtanordnung den Volumenstrom des Prozessgases, der über das Pulverbett in der Kabine 4 streicht, konstant oder zumindest nahezu konstant zu halten, wird das für den Volumenstrom zuständige Gebläse 8 über eine integrierte Volumenstrommessung kontinuierlich geregelt, insbesondere unter Nutzung der Steuerelektronik 39. Eine solche Volumenstrommessung kann beispielsweise mittels einer Blende und einer Druckmessung vor und hinter der Blende, beispielsweise im Bereich der Saugübergangsleitung 17 und somit bevorzugt in Strömungsrichtung des Mediums 7 zwischen den Filtereinrichtungen 2 und dem Gebläse 8 durchgeführt werden.

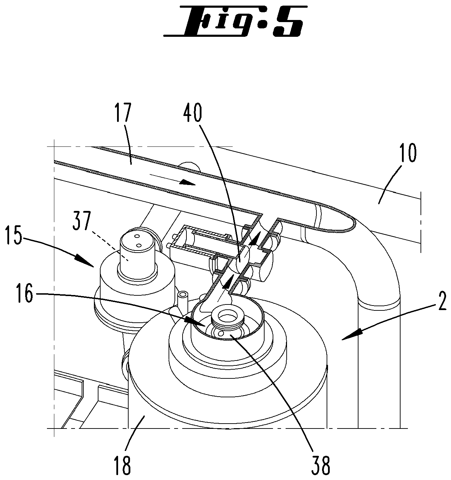

Im Zuge eines Herausnehmens einer Filtereinrichtung 2 kann der Durchfluss von Prozessgas durch die auszunehmende Filtereinrichtung 2 über ein bevorzugt ebenfalls pneumatisch ansteuerbares Drosselventil 40 derart kontinuierlich verringert werden, dass die Volumenstromregelung das Umwälzgebläse 8 sicher nachregeln kann. Ein solches Drosselventil 40 kann beispielsweise, wie auch bevorzugt, zugeordnet dem Mediumauslass 16 vorgesehen sein, weiter bevorzugt in einem Leitungsabschnitt zwischen der Auslassöffnung 33 bzw. dem dieser Auslassöffnung 33 zugeordneten Ventil 38 und der Saugübergangsleitung 17 (vergleiche Figur 5).

Zur Abreinigung des Filters 26 in der Filtereinrichtung 2 und zum Ablösen des sich im Zuge der Filterung des Prozessgases 7 absetzenden Filterkuchens an der Filterwandung 27 ist die Filtereinrichtung 2 in einen Regenerationsbetrieb versetzbar. Hierzu wird die Filtereinrichtung 2, wie vorbeschrieben, zunächst aus dem Durchlauf von Prozessgas entnommen bzw. gegenüber den Leitungen abgesperrt zufolge Schließen der Absperrventile 37 und 38 und somit Verschluss des Mediumeinlasses 15 und des Mediumauslasses 16.

Über eine gesonderte Pumpe, insbesondere Vakuumpumpe 41, wird zur Vorbereitung des Abreinigungsvorganges zunächst in dem Filtergehäuse 18 ein Unterdruck erzeugt. Dabei wird der Innenraum 25 des Filtergehäuses 18 und darüber hinaus auch der zu diesem Innenraum 25 hin offene Innenraum der Filtergut-Sammelkammer 24 evakuiert (siehe schematische Darstellung in Figur 7 - Pfeil e).

Bei der Vakuumpumpe 41, die bevorzugt auch Teil des Filtermoduls 3 sein kann, kann es sich, wie weiter auch bevorzugt, um eine beispielsweise ölgeschmierte Vakuumpumpe handeln, wie diese beispielsweise aus der DE 10 2015 107 721 A1 bekannt ist.

Eventuell im Zuge der Evakuierung abgesaugte Filtergut-Partikel, die sich weder in der Filterwandung 27 des Filters 26 abgesetzt noch in die Filtergut-Sammelkammer 24 abgeschieden wurden, werden im Falle einer ölgeschmierten Vakuumpumpe 41 im Öltank der Vakuumpumpe aufgefangen und mit dem nächsten üblichen Ölwechsel entsorgt.

Ergänzend oder alternativ kann eine von der Vakuumpumpe 41 beaufschlagte Absaugleitung bezüglich einer Durchströmrichtung des Filters 26 innenseitig des Filters 26, also bei dem Ausführungsbeispiel in einem durch die Filterwandung 27 begrenzten Innenraum, münden. Die Absaugung kann also in diesem Sinn auf einer Reinseite des Filters 26 stattfinden. Hierdurch kann erreicht werden, dass praktisch keine Filtergut-Partikel mehr mitgesaugt werden.

Nach Erreichen eines Unterdrucks von beispielsweise 500 mbar bis hin zu weiter beispielsweise 1 mbar im Bereich des Innenraumes 25 (erfassbar über einen Drucksensor) wird über die Steuerelektronik 29 der Absaugvorgang über die Vakuumpumpe 41 gestoppt und hiernach ein beispielsweise im Bereich der Übergangsleitung 23 zwischen dem Filtergehäuse 18 und der Filtergut-Sammelkammer 24 angeordnetes Ausschleusventil 42 geschlossen. Das Ausschleusventil 42 unterbricht die Leitungsverbindung zwischen dem den Filter 26 aufweisenden Innenraum des Filtergehäuses 18 und dem Innenraum der Filtergut-Sammelkammer 24.

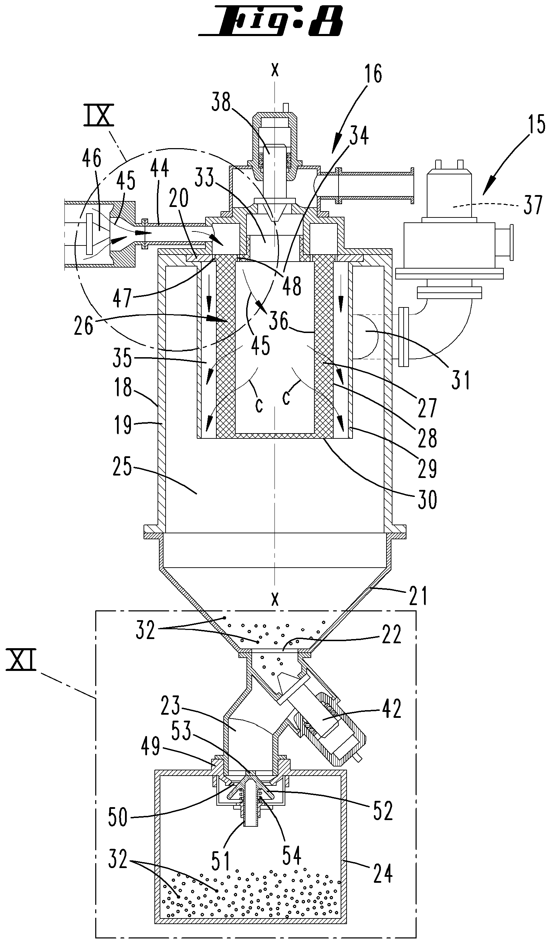

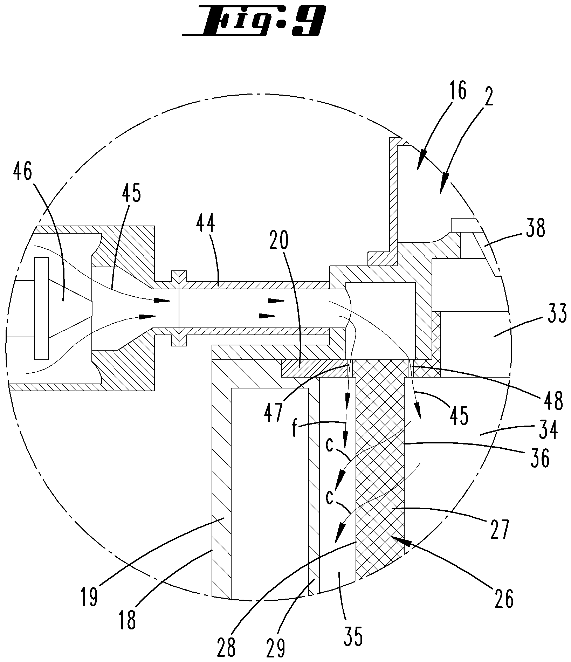

Über einen gesonderten Spülmediumspeicher 43, der auch Teil des Filtermoduls 3 sein kann, wird zur Abreinigung des Filters 26 über eine Spülleitung 44 ein Spülmedium 45 in Richtung auf die Filterwandung 27 eingebracht. Das Einbringen des Spülmediums 45 kann über ein bevorzugt elektrisch betätigbares Steuerventil 46 ausgelöst werden (siehe Figur 8 und schematische Darstellung in Figur 9). Das Steuerventil 46 kann über die Steuerelektronik 39 angesteuert werden.

Zufolge von beispielsweise in einer Mehrzahl um die Längsachse x herum vorgesehenen Spülmediumeinlässen 47 und 48 in der Gehäusedecke 20 ist das Spülmedium 45 einbringbar, wobei gemäß den Darstellungen über die Spülmediumeinlässe 48 das Spülmedium 45 derart in den Filterinnenraum 34 eingeleitet wird, dass dieses die Filterwandung 27 in einer Richtung c entgegen der Durchströmrichtung des Mediums 7 im üblichen Filterbetrieb (Richtung d - vergleiche Figur 4) durchsetzt. Es wird so entsprechend eine Durchsetzung der Filterwandung 27 von dem Spülmedium 45 von der Innenfläche 36 in Richtung auf die Außenfläche 28 erreicht.

Zugleich oder auch zeitlich versetzt zu der vorbeschriebenen Strömung wird über den radial äußeren Spülmediumeinlass 47 das Spülmedium 45 im Wesentlichen entlang der Außenfläche 28 der Filterwandung 27 eingeleitet (Richtung f), um so das insbesondere über den Spülmediumanteil, der die Filterwandung 27 von innen nach außen durchsetzt, gelöste Filtergut 32 sicher aus dem Ansaugbereich in Richtung auf den Gehäuseboden 21 abzutragen.

Die Einleitung des Spülmediums 45 kann allein zufolge Einsaugen aufgrund des gegenüber der Umgebung in dem Innenraum 25 des Filtergehäuses 18 herrschenden Unterdrucks erreicht sein, kombinativ hierzu aber gegebenenfalls auch durch ein Einblasen des Spülmediums 45 in den Innenraum 25. Durch den Unterdruck im Innenraum 25 ist eine günstige Spülmedium-Strömung über und durch die Filterwandung 27 sichergestellt.

Zum Ende des Abreinigungsvorganges herrscht in dem Innenraum 25 des Filtergehäuses 18 bevorzugt wieder der gleiche Druck, wie in den angeschlossenen Leitungen (Saugleitung 10 und Saugübergangsleitung 17), sodass beim Öffnen der Sperrventile 37 und 38, wodurch in diesem Beispielsfall das Wiedereinbinden der abgereinigten Filtereinrichtung in den Filterungsprozess erreicht wird, keine Rückströmung entgegen der üblichen Strömungsrichtung des Prozessgases 7 stattfindet.

Als Spülmedium 45 wird bevorzugt dasselbe Medium genutzt, das als Prozessgas auch zum Abtrag von Verunreinigungen in der Kabine 4 der Metall-Druckeinrichtung 1 genutzt ist. So steht als Spülmedium 45 bevorzugt Argon und/oder Stickstoff genutzt.

Ein integriertes Steuerungssystem (Steuerelektronik 39) überwacht den Abreinigungsprozess und ermöglicht verschiedene Reinigungszyklen, insbesondere hinsichtlich der zugeführten Menge an Spülmedium 45 und weiter hinsichtlich der Öffnungszeiten des Steuerventils 46, wobei weiter den Spülmediumeinlässen 47 und 48 jeweils ein gesondertes Steuerventil zugeordnet sein kann, sodass auch hierüber bei entsprechender Ansteuerung der verschiedenen Steuerventile eine Anpassung des Reinigungsvorganges vorgenommen werden kann.

Durch ein erneutes Evakuieren kann ggf. unmittelbar nach einem ersten Reinigungsvorgang auch ein zweiter Reinigungsvorgang nachgeschaltet werden.

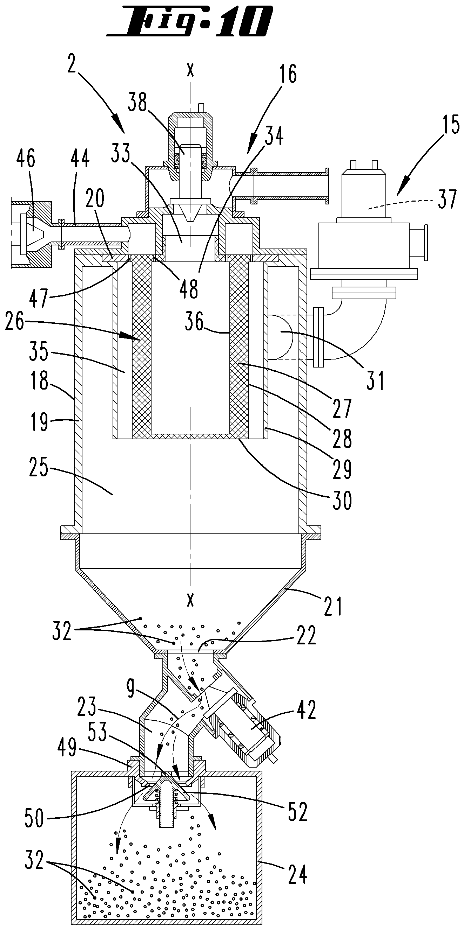

Mit Beendigung des Abreinigungsvorganges und dem damit einhergehenden Druckausgleich in dem Innenraum 25 des Filtergehäuses 18 ergibt sich zwischen dem Innenraum 25 und dem Innenraum der Filtergut-Sammelkammer 24 ein Druckunterschied, der mit Öffnen des Ausschleusventils 42 ein Absaugen der während des Abreinigungsprozesses gelösten und bevorzugt gehäusebodenseitig gesammelten Filterguts 32 in die Filtergut-Sammelkammer 24 bewirkt. Entsprechend wird bereits allein durch Öffnen des Ausschleusventils 42 eine Übertragung des gelösten Filtergutes 32 in die Sammelkammer ausgelöst (vergleiche Figur 10 - Pfeil g). Der Absaugvorgang hält bis zu einem Druckausgleich zwischen dem Innenraum 25 und der Sammelkammer 24 an. Darüber hinaus kann Filtergut 32 auch schwerkraftabhängig in die Sammelkammer 24 abrieseln.

Aus dieser Filtergut-Sammelstellung gemäß Figur 10 heraus kann die Filtereinrichtung 2 zufolge Öffnen der Sperrventile 37 und 38 im Mediumeinlass 15 und im Mediumauslass 16 wieder in den Filterkreislauf des Filtermoduls 3 eingeschleust werden (vgl. Figur 13).

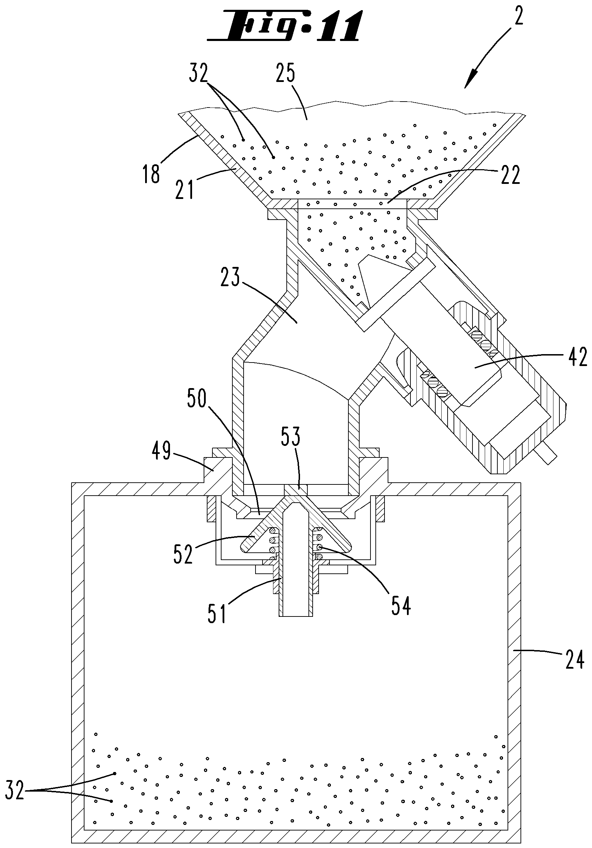

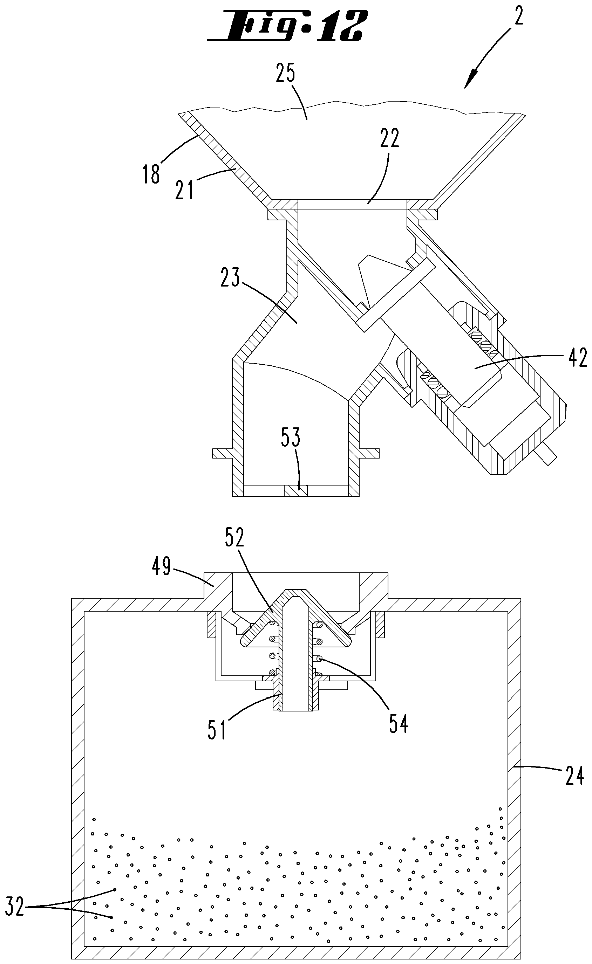

Zur Entsorgung des in der Filtergut-Sammelkammer 24 gesammelten Filterguts 32 ist die Filtergut-Sammelkammer 24 von dem Filtergehäuse 18 entfernbar. Hierzu kann das rohrförmige freie Ende der Übergangsleitung 23 zur strömungsdichten Aufnahme eines Muffenabschnitts 49 der Sammelkammer 24 ausgebildet sein (vergleiche Figuren 11 und 12). Die von dem Muffenabschnitt 49 umgebene Kammeröffnung 50 ist bevorzugt verschließbar mittels eines Absperrventils 51. Ein in Richtung auf die Übergangsleitung 23 gerichteter Ventilkegel 52 kann dabei in der Andockstellung der Sammelkammer 24 an dem Filtergehäuse 18 gemäß Figur 11 abgestützt sein an einem Niederhalter 53 im Bereich der Übergangsleitung 23, sodass das Absperrventil 51 in einer die Kammeröffnung 50 freigebenden Stellung gehalten ist.

Im Zuge des Abnehmens der Filtergut-Sammelkammer 24 von der Übergangsleitung 23, beispielsweise zufolge Abschrauben, verliert der Ventilkegel 52 die Abstützung an dem Niederhalter 53 der Übergangsleitung 23, zufolge dessen das Absperrventil 51 unter Beaufschlagung einer Druckfeder 54 selbsttätig in eine die Kammeröffnung 50 verschließende Stellung fällt (siehe Figur 12).

Bevorzugt erfolgt eine Entfernung der Filtergut-Sammelkammer 24 bei geschlossenem Ausschleusventil 42, sodass bei Abnahme der Sammelkammer die Atmosphäre im Innenraum 25, im Wesentlichen gebildet durch das Medium 7, erhalten bleibt. Auch bleibt durch die Absperrung des Innenraumes der Filtergut-Sammelkammer durch das Absperrventil 51 das hierin aufgenommene Filtergut 32 unter Prozessgasatmosphäre, entsprechend unter einer durch das Prozessgas 7 bzw. das Spülmedium 45 gebildeten Atmosphäre.

Zur Neutralisierung des Filtergutes 32 in der Filtergut-Sammelkammer 24 ist auch eine Flutung der Sammelkammer beispielsweise durch Wasser oder Öl möglich.

Das Spülmedium 45 und/oder das Medium 7 können zudem zur pneumatischen Ventilbetätigung insbesondere der Sperrventile 37 und 38, darüber hinaus gegebenenfalls auch der Drosselventile 40 genutzt werden.

Über elektronische Schnittstellen zur elektronischen Steuerung der Metall-Druckeinrichtung 1 lässt sich das durch das Filtermodul 3 ergebende Subsystem optimal in die Gesamtsteuerung der Metall-Druckeinrichtung 1 integrieren.

Soweit vorstehend auf Prozessgas Bezug genommen ist, kann bei einer Nutzung der Filtereinrichtung im Zusammenhang mit einem anderen abzureinigenden Medium, also insbesondere einer Nutzung in einem anderen Zusammenhang als mit einer Metall-Druckeinrichtung, das Prozessgas ein sonstiges Medium sein.

**Liste der Bezugszeichen**

| | | | |
|---|---|---|---|
| 1 | Metall-Druckeinrichtung | 29 | Leitwandung |
| 2 | Filtereinrichtung | 30 | Stirnfläche |
| 3 | Filtermodul | 31 | Einlassöffnung |
| 4 | Kabine | 32 | Filtergut |
| 5 | Laservorrichtung | 33 | Auslassöffnung |
| 6 | Tür | 34 | Filterinnenraum |
| 7 | Medium | 35 | Ringraum |
| 8 | Umwälzgebläse | 36 | Innenfläche |
| 9 | Druckleitung | 37 | Sperrventil |
| 10 | Saugleitung | 38 | Sperrventil |
| 11 | Mediumkühler | 39 | Steuerelektronik |
| 12 | Vorabscheider | 40 | Drosselventil |
| 13 | Feinstfilter | 41 | Vakuumpumpe |
| 14 | Gehäuse | 42 | Ausschleusventil |
| 15 | Mediumeinlass | 43 | Spülmediumspeicher |
| 16 | Mediumauslass | 44 | Spülleitung |
| 17 | Saugübergangsleitung | 45 | Spülmedium |
| 18 | Filtergehäuse | 46 | Steuerventil |
| 19 | Gehäusewandung | 47 | Spülmediumeinlass |
| 20 | Gehäusedecke | 48 | Spülmediumeinlass |
| 21 | Gehäuseboden | 49 | Muffenabschnitt |
| 22 | Bodenöffnung | 50 | Kammeröffnung |
| 23 | Übergangsleitung | 51 | Absperrventil |
| 24 | Filtergut-Sammelkammer | 52 | Ventilkegel |
| 25 | Innenraum | 53 | Niederhalter |
| 26 | Filter | 54 | Druckfeder |
| 27 | Filterwandung | 55 | Einlass |
| 28 | Außenfläche | 56 | Einlass |
| a | Richtung | | |
| b | Richtung | | |
| c | Richtung | | |
| d | Richtung | | |
| e | Pfeil | | |
| f | Richtung | | |
| g | Pfeil | | |
| x | Längsachse | | |

## Patentansprüche

1. Verfahren zur intermittierenden Abreinigung eines Filters (26) in einer Filtereinrichtung (2), mit einem Filtergehäuse (18) und dem darin befindlichen Filter (26), wobei das Filtergehäuse (18) für ein zu filterndes Medium (7) einen Mediumeinlass (15) und einen Mediumauslass (16) aufweist, wobei weiter in einem Filterbetrieb das durch den Mediumeinlass (15) strömende Medium (7) den Filter (26) durchsetzt und über den Mediumauslass (16) die Filtereinrichtung (2) verlässt, wobei darüber hinaus zur Abreinigung des Filters (2) sowohl der Mediumeinlass (15) als auch der Mediumauslass (16) geschlossen werden, danach in dem Filtergehäuse (18) ein Unterdruck erzeugt wird und mithilfe des Unterdrucks ein den Filter (26) zur Abreinigung beaufschlagendes Spülmedium (45) in das Filtergehäuse (18) eingesaugt wird, wobei weiter die Filtereinrichtung (2) eine Filtergut-Sammelkammer (24) aufweist, **dadurch gekennzeichnet, dass** die Filtergut-Sammelkammer (24) vor dem Einsaugen des Spülmediums (45) in das Filtergehäuse (18) zur Aufrechterhaltung des Unterdrucks in der Filtergut-Sammelkammer (24) abgeschlossen wird.

2. Verfahren nach Anspruch 1, **dadurch gekennzeichnet, dass** das Filtergehäuse (18) zusätzlich zu dem Mediumeinlass (15) und dem Mediumauslass (16) einen absperrbaren Spülmediumeinlass (47, 48) aufweist.

3. Verfahren zum Betrieb einer Metall-Druckeinrichtung (1), mit einer Kabine (4), in welcher der Metalldruck vorgenommen wird, wobei die Kabine (4) einen Einlass (55) und einen Auslass (56) aufweist und wobei weiter ein Gebläse (8) vorgesehen ist, mit welchem eine Atmosphäre in der Kabine (4) regenerierbar ist, wobei zur Regenerierung der Atmosphärezwei oder mehr Filtereinrichtungen (2) mit jeweils einem Filter (26) vorgesehen sind, die parallel betrieben werden, wobei zur Abreinigung einer Filtereinrichtung (2) diese Filtereinrichtung (2) abgesperrt und aus dem Regnerationsbetrieb herausgenommen wird gemäß dem Verfahren nach einem der Ansprüche 1 oder 2, **dadurch gekennzeichnet, dass** die Filtereinrichtung (2) mit einem Spülmedium (45) betrieben wird und dass die Herausnahme der einen Filtereinrichtung (2) zur Reinigung des Filters (26) in der Filtereinrichtung (2) einhergeht mit einer Erhöhung des Volumenstroms in der verbleibenden Filtereinrichtung (2), wobei die Herausnahme zeitlich abgestimmt so vorgenommen wird, dass ein vorgegebener Grenzwert bezüglich einer Volumenstromzunahme oder Volumenstromabnahme nicht überschritten wird.

4. Filtereinrichtung (2) für eine Metall-Druckeinrichtung (1) mit einer Kabine (4), in welcher Kabine (4) der Metalldruck vorgenommen wird, wobei die Filtereinrichtung (2) ein Filtergehäuse (18), mit einem darin befindlichen Filter (26) für ein in einem Filterbetrieb der Filtereinrichtung (2) zu filterndes Medium (7), sowie einen Mediumeinlass (15) und einen Mediumauslass (16) für das zu filternde Medium (7) aufweist, wobei darüber hinaus das Filtergehäuse (18) zusätzlich zu dem Mediumeinlass (15) und dem Mediumauslass (16) einen absperrbaren Spülmediumeinlass (47, 48) zum Einbringen eines Spülmediums (45) in den Innenraum (25) des Filtergehäuses (18) im Abreinigungsbetrieb aufweist, **dadurch gekennzeichnet, dass** die Filtereinrichtung (2) zugeordnet dem Filtergehäuse (18) eine Filtergut-Sammelkammer (24) aufweist und dass die Filtergut-Sammelkammer (24) von dem Filtergehäuse (18) abnehmbar ist.

5. Filtereinrichtung nach Anspruch 4, **dadurch gekennzeichnet, dass** dem Mediumeinlass (15) und dem Mediumauslass (16) jeweils ein Sperrventil (37, 38) zugeordnet ist, wobei das Sperrventil (37, 38) bevorzugt ein pneumatisches Ventil ist.

6. Filtereinrichtung nach Anspruch 5, **dadurch gekennzeichnet, dass** die pneumatischen Ventile unter Nutzung des Spülmediums (45) betätigbar sind.

7. Filtereinrichtung nach einem der Ansprüche 4 bis 6, **dadurch gekennzeichnet, dass** zum Verschluss der Filtergut-Sammelkammer (24) ein Absperrventil (51) vorgesehen ist, wobei das Absperrventil (51) mit Abnehmen der Filtergut-Sammelkammer (24) von dem Filtergehäuse (18) bevorzugt federunterstützt in eine Verschlussstellung verlagert ist.

8. Filtereinrichtung nach einem der Ansprüche 4 bis 7, **dadurch gekennzeichnet, dass** der Spülmediumeinlass (47, 48) so ausgebildet ist, dass zur Abreinigung des Filters (26) in einem Abreinigungsbetrieb der Filtereinrichtung (2) das Spülmedium (45) in einer zu dem Filterbetrieb entgegengesetzten Richtung (c) einströmt, wobei, bevorzugt, der Spülmediumeinlass (47, 48) so gerichtet ist, dass zur Abreinigung des Filters (26) in dem Abreinigungsbetrieb das Spülmedium (45) auf eine im Filterbetrieb eine Außenfläche (28) einer Filterwandung (27) darstellenden Seite der Filterwandung (27) strömt.

9. Filtereinrichtung nach einem der Ansprüche 4 bis 8, **dadurch gekennzeichnet, dass** nach einem Druckausgleich in dem Filtergehäuse (18) durch das einströmende Spülmedium (45) ein Zugang zu der Filtergut-Sammelkammer (24) öffenbar ist, zur Zuleitung von Filtergut (32) in die Filtergut-Sammelkammer (24), wobei, bevorzugt, die Zuleitung des Filterguts (32) in die Filtergut-Sammelkammer (24) durch Einsaugen erfolgt.

10. Filtereinrichtung nach einem der Ansprüche 4 bis 9, **dadurch gekennzeichnet, dass** in dem Mediumauslass (16) ein bevorzugt steuerbares Drosselventil (40) angeordnet ist.

11. Filtereinrichtung nach einem der Ansprüche 4 bis 10, **dadurch gekennzeichnet, dass** zwei Spülmedieneinlässe (47, 48) vorgesehen sind, von denen einer eine Durchsetzung der Filterwandung (27) mit Spülmedium (45) in eine entgegengesetzte Richtung (c) zum Filterbetrieb bewirkt und einer eine Leitung des Spülmediums (45) auf die Außenfläche (28) der Filterwandung (27), wobei, bevorzugt, jedem Spülmediumeinlass (47, 48) ein Steuerventil (46) zugeordnet ist und/ oder das Steuerventil (46) elektrisch betätigbar ist.

12. Filtereinrichtung nach einem der Ansprüche 4 bis 11, **dadurch gekennzeichnet, dass** zwei oder mehr Filtereinrichtungen (2) mit jeweils einem Filter (26) vorgesehen sind, wobei, bevorzugt, die zwei oder mehr Filtereinrichtungen (2) parallel betreibbar sind und/oder zur Abreinigung einer Filtereinrichtung (2) diese Filtereinrichtung (2) absperrbar ist, wobei, bevorzugt, die abgesperrte Filtereinrichtung (2) aus dem Regenerationsbetrieb herausnehmbar und zur Reinigung des Filters (26) mit dem Spülmedium (45) betreibbar ist und/oder der Filtereinrichtung (2) oder den mehreren Filtereinrichtungen (2) ein gesonderter Spülmediumspeicher (43) zugeordnet ist.

13. Filtereinrichtung nach einem der Ansprüche 4 bis 12, **dadurch gekennzeichnet, dass** der Filtereinrichtung (2) in Strömungsrichtung des zu reinigenden Mediums (7) betrachtet ein Vorabscheider (12) vorgeschaltet ist.

14. Filtereinrichtung nach einem der Ansprüche 4 bis 13, **dadurch gekennzeichnet, dass** der Filtereinrichtung (2) in Strömungsrichtung des zu reinigenden Mediums (7) betrachtet ein Feinstfilter (13) nachgeschaltet ist.

15. Filtereinrichtung nach einem der Ansprüche 4 bis 14, **dadurch gekennzeichnet, dass** eine Strömung des zu filternden Mediums (7) durch ein Gebläse (8) erreichbar ist, wobei, bevorzugt, in Strömungsrichtung nachgeschaltet dem Gebläse (8) ein Mediumkühler (11) vorgesehen ist.

## Claims

1. A method for intermittently cleaning a filter (26) in a filter device (2), which filter device comprises a filter housing (18) and the filter (26) located therein, wherein the filter housing (18) has a medium inlet (15) and a medium outlet (16) for a medium (7) to be filtered, wherein furthermore the medium (7) flowing through the medium inlet (15) passes through the filter (26) during filter operation and exits the filter device (2) via the medium outlet (16), wherein furthermore for cleaning the filter (2) both the medium inlet (15) and the medium outlet (16) are closed, thereafter a negative pressure is produced in the filter housing (18) and, with the aid of the negative pressure, a flushing medium (45) which acts upon the filter (26) for cleaning is sucked into the filter housing (18), wherein further the filter device (2) has a filtered material collecting chamber (24), **characterized in that** before sucking the flushing medium (45) into the filter housing (18), the filtered material collecting chamber (24) is closed in order to maintain the negative pressure in the filtered material collecting chamber (24).

2. The method according to claim 1, **characterized in that** the filter housing (18), in addition to the medium inlet (15) and the medium outlet (16), has a flushing medium inlet (47, 48) that can be shut off.

3. The method for operating a metal printing device (1), which printing device comprises an enclosure (4) in which the metal printing is carried out, wherein the enclosure (4) has an inlet (55) and an outlet (56), and wherein furthermore a fan (8) is provided with which an atmosphere in the enclosure (4) can be regenerated, wherein for regenerating the atmosphere two or more filter devices (2), each having one filter (26), are provided and operated in parallel, wherein for cleaning a filter device (2), this filter device (2) is shut off and removed from regeneration mode according to the method to one of the claims 1 or 2, **characterized in that** the filter device (2) is operated with a flushing medium (45), and that the removal of one filter device (2) for cleaning the filter (26) in the filter device (2) is accompanied by an increase in the volume flow in the remaining filter device (2), wherein the removal is carried out in a timed manner such that a predetermined limit value with respect to a volume flow increase or volume flow decrease is not exceeded.

4. A filter device (2) for a metal printing device (1) comprising an enclosure (4), in which enclosure (4) the metal printing is carried out, wherein the filter device (2) has a filter housing (18) with a filter (26) located therein for a medium (7) to be filtered in a filter operation of the filter device (2) as well as a medium inlet (15) and a medium outlet (16) for the medium (7) to be filtered, wherein furthermore the filter housing (18), in addition to the medium inlet (15) and the medium outlet (16), has a flushing medium inlet (47, 48) that can be shut off for introducing a flushing medium (45) into the interior (25) of the filter housing (18) in cleaning operation, **characterized in that** the filter device (2) has a filtered material collecting chamber (24) assigned to the filter housing (18), and **in that** the filtered material collecting chamber (24) is removable from the filter housing (18).

5. The filter device according to claim 4, **characterized in that** the medium inlet (15) and the medium outlet (16) are each assigned a shutoff valve (37, 38), wherein the shutoff valve (37, 38) is preferably a pneumatic valve.

6. The filter device according to claim 5, **characterized in that** the pneumatic valves are operable by using the flushing medium (45).

7. The filter device according to one of the claims 4 to 6, **characterized in that** a shutoff valve (51) is provided for closing the filtered material collecting chamber (24), wherein upon removal of the filtered material collecting chamber (24) from the filter housing (18), the shutoff valve (51) is preferably displaced in a spring-supported manner into a closed position.

8. The filter device according to one of the claims 4 to 7, **characterized in that** the flushing medium inlet (47, 48) is formed such that for cleaning the filter (26) in a cleaning operation of the filter device (2), the flushing medium (45) flows in a direction (c) opposite to the filter operation, wherein, preferably, the flushing medium inlet (47, 48) is directed such that for cleaning the filter (26) in cleaning operation, the flushing medium (45) flows onto a side of the filter wall (27) representing an outer surface (28) of a filter wall (27) in filter operation.

9. The filter device according to one of the claims 4 to 8, **characterized in that** after pressure equalization in the filter housing (18) by the inflowing flushing medium (45), an access to the filtered material collecting chamber (24) can be opened for feeding filtered material (32) into the filtered material collecting chamber (24), wherein, preferably, feeding the filtered material (32) into the filtered material collecting chamber (24) is carried out by suction.

10. The filter device according to one of the claims 4 to 9, **characterized in that** a preferably controllable throttle valve (40) is arranged in the medium outlet (16).

11. The filter device according to one of the claims 4 to 10, **characterized in that** two flushing medium inlets (47, 48) are provided, one of which causes flushing medium (45) to pass through the filter wall (27) in a direction (c) opposite to filter operation, and one of which causes the flushing medium (45) to be directed onto the outer surface (28) of the filter wall (27), wherein, preferably, each flushing medium inlet (47, 48) is assigned a control valve (46) and/or the control valve (46) is electrically operable.

12. The filter device according to one of the claims 4 to 11, **characterized in that** two or more filter devices (2) each having one filter (26) are provided, wherein, preferably, the two or more filter devices (2) are operable in parallel and/or for cleaning a filter device (2), this filter device (2) can be shut off, wherein, preferably, the shut-off filter device (2) is removable from the regeneration mode and operable with the flushing medium (45) for cleaning the filter (26) and/or a separate flushing medium reservoir (43) is assigned to the filter device (2) or the multiple filter devices (2).

13. The filter device according to one of the claims 4 to 12, **characterized in that** a pre-separator (12) is connected upstream of the filter device (2) as viewed in the flow direction of the medium (7) to be cleaned.

14. The filter device according to one of the claims 4 to 13, **characterized in that** a micro filter (13) is connected downstream of the filter device (2) as viewed in the flow direction of the medium (7) to be cleaned.

15. The filter device according to one of the claims 4 to 14, **characterized in that** a flow of the medium (7) to be filtered is achievable by a fan (8), wherein, preferably, a medium cooler (11) is provided downstream of the fan (8) in the direction of flow.

## Revendications

1. Procédé de nettoyage intermittent d'un filtre (26) dans un dispositif de filtration (2), avec un boîtier de filtre (18) et le filtre (26) qui s'y trouve, le boîtier de filtre (18) présentant pour un milieu à filtrer (7) une entrée de milieu (15) et une sortie de milieu (16), dans lequel, en outre, dans un mode de filtrage, le fluide (7) s'écoulant par l'entrée de fluide (15) traverse le filtre (26) et quitte le dispositif de filtrage (2) par la sortie de fluide (16), dans lequel, en outre, pour le nettoyage du filtre (2), tant l'entrée de fluide (15) que la sortie de fluide (16) sont fermées, ensuite, une dépression est générée dans le boîtier de filtre (18) et, à l'aide de la dépression, un agent de rinçage (45) sollicitant le filtre (26) pour le nettoyage est aspiré dans le boîtier de filtre (18), le dispositif de filtration (2) présentant en outre une chambre de collecte de produit à filtrer (24), **caractérisé en ce que** la chambre de collecte de produit à filtrer (24) est fermée avant l'aspiration de l'agent de rinçage (45) dans le boîtier de filtre (18) pour maintenir la dépression dans la chambre de collecte de produit à filtrer (24).

2. Procédé selon la revendication 1, **caractérisé en ce que** le boîtier de filtre (18) présente, en plus de l'entrée de fluide (15) et de la sortie de fluide (16), une entrée de fluide de rinçage (47, 48) pouvant être fermée.

3. Procédé d'exploitation d'un dispositif d'impression de métal (1), avec une cabine (4) dans laquelle l'impression de métal est effectuée, la cabine (4) présentant une entrée (55) et une sortie (56) et une soufflante (8) étant en outre prévue, avec laquelle une atmosphère peut être régénérée dans la cabine (4) , dans lequel, pour la régénération de l'atmosphère, il est prévu deux ou plusieurs dispositifs de filtrage (2) avec chacun un filtre (26), qui sont exploités en parallèle, dans lequel, pour le nettoyage d'un dispositif de filtrage (2), ce dispositif de filtrage (2) est bloqué et retiré de l'exploitation de régénération selon le procédé selon l'une des revendications 1 ou 2, **caractérisé en ce que** le dispositif de filtration (2) est exploité avec un fluide de rinçage (45) et **en ce que** le retrait d'un dispositif de filtration (2) pour le nettoyage du filtre (26) dans le dispositif de filtration (2) s'accompagne d'une augmentation du débit volumique dans le dispositif de filtration (2) restant, le retrait étant effectué de manière coordonnée dans le temps de telle sorte qu'une valeur limite prédéfinie concernant une augmentation du débit volumique ou une diminution du débit volumique ne soit pas dépassée.

4. Dispositif de filtrage (2) pour un dispositif d'impression de métal (1) avec une cabine (4), dans laquelle l'impression de métal est effectuée, le dispositif de filtrage (2) présentant un boîtier de filtre (18), avec un filtre (26) se trouvant à l'intérieur pour un milieu (7) à filtrer dans un mode de filtrage du dispositif de filtrage (2), ainsi qu'une entrée de milieu (15) et une sortie de milieu (16) pour le milieu à filtrer (7), le boîtier de filtre (18) présentant en outre, en plus de l'entrée de milieu (15) et de la sortie de milieu (16), une entrée de milieu de rinçage (47, 48) pouvant être fermée pour l'introduction d'un milieu de rinçage (45) dans l'espace intérieur (25) du boîtier de filtre (18) en mode de nettoyage, **caractérisé en ce que** le dispositif de filtre (2) présente, associée au boîtier de filtre (18), une chambre de collecte de produit à filtrer (24) et **en ce que** la chambre de collecte de produit à filtrer (24) peut être retirée du boîtier de filtre (18).

5. Dispositif de filtration selon la revendication 4, **caractérisé en ce qu'**une soupape d'arrêt (37, 38) est respectivement associée à l'entrée de fluide (15) et à la sortie de fluide (16), la soupape d'arrêt (37, 38) étant de préférence une soupape pneumatique.

6. Dispositif de filtration selon la revendication 5, **caractérisé en ce que** les soupapes pneumatiques peuvent être actionnées en utilisant le fluide de rinçage (45).

7. Dispositif de filtration selon l'une des revendications 4 à 6, **caractérisé en ce qu'**une vanne d'arrêt (51) est prévue pour fermer la chambre de collecte de produit filtré (24), la vanne d'arrêt (51) étant déplacée dans une position de fermeture de préférence par un ressort lorsque la chambre de collecte de produit filtré (24) est retirée du boîtier de filtre (18).

8. Dispositif de filtration selon l'une des revendications 4 à 7, **caractérisé en ce que** l'entrée de fluide de rinçage (47, 48) est configurée de telle sorte que, pour le nettoyage du filtre (26) dans un mode de nettoyage du dispositif de filtration (2), le fluide de rinçage (45) s'écoule dans une direction (c) opposée au mode de filtration, de préférence, l'entrée de fluide de rinçage (47, 48) étant orientée de telle sorte que, pour le nettoyage du filtre (26) en mode de nettoyage, le fluide de rinçage (45) s'écoule sur un côté de la paroi du filtre (27) qui, en mode de filtrage, représente une surface extérieure (28) d'une paroi du filtre (27).

9. Dispositif de filtration selon l'une des revendications 4 à 8, **caractérisé en ce qu'**après un équilibrage de pression dans le boîtier de filtre (18), un accès à la chambre de collecte de matériau filtrant (24) peut être ouvert par le fluide de rinçage (45) entrant, pour l'amenée de matériau filtrant (32) dans la chambre de collecte de matériau filtrant (24) , l'amenée du matériau filtrant (32) dans la chambre de collecte de matériau filtrant (24) se faisant, de préférence, par aspiration.

10. Dispositif de filtration selon l'une des revendications 4 à 9, **caractérisé en ce qu'**une vanne d'étranglement (40), de préférence commandable, est disposée dans la sortie de fluide (16).

11. Dispositif de filtration selon l'une des revendications 4 à 10, **caractérisé en ce qu'**il est prévu deux entrées de fluide de rinçage (47, 48), dont l'une provoque une traversée de la paroi de filtre (27) avec un fluide de rinçage (45) dans une direction (c) opposée au fonctionnement du filtre et dont l'autre provoque une conduite du fluide de rinçage (45) sur la surface extérieure (28) de la paroi de filtre (27), une vanne de commande (46) étant, de préférence, associée à chaque entrée de fluide de rinçage (47, 48) et/ou la vanne de commande (46) pouvant être actionnée électriquement.

12. Dispositif de filtration selon l'une des revendications 4 à 11, **caractérisé en ce qu'**il est prévu deux ou plusieurs dispositifs de filtration (2) avec chacun un filtre (26), les deux ou plusieurs dispositifs de filtration (2) pouvant, de préférence, être exploités en parallèle et/ou ce dispositif de filtration (2) pouvant être bloqué pour le nettoyage d'un dispositif de filtration (2), où, de préférence, le dispositif de filtration (2) bloqué peut être retiré du mode de régénération et peut être exploité avec le fluide de rinçage (45) pour le nettoyage du filtre (26) et/ou un réservoir de fluide de rinçage (43) séparé est associé au dispositif de filtration (2) ou aux plusieurs dispositifs de filtration (2).

13. Dispositif de filtration selon l'une des revendications 4 à 12, **caractérisé en ce qu'**un pré-séparateur (12) est monté en amont du dispositif de filtration (2), vu dans le sens d'écoulement du fluide à purifier (7).

14. Dispositif de filtration selon l'une des revendications 4 à 13, **caractérisé en ce qu'**un filtre F (13) est monté en aval du dispositif de filtration (2), vu dans le sens d'écoulement du fluide à épurer (7).

15. Dispositif de filtration selon l'une des revendications 4 à 14, **caractérisé en ce qu'**un écoulement du milieu à filtrer (7) peut être obtenu par une soufflante (8), un refroidisseur de milieu (11) étant prévu, de préférence, en aval de la soufflante (8) dans le sens de l'écoulement.
